# EUROPÄISCHE PATENTANMELDUNG

(11) **EP 4 586 559 A2**
(43) Veröffentlichungstag der Anmeldung: **16.07.2025**
(21) Anmeldenummer: 25150960.0
(22) Anmeldetag: 09.01.2025
(51) Int. Cl.: H04L 12/46

(54) **KOMMUNIKATIONSVORRICHTUNG FÜR EINE ELEKTRONISCHE MEDIENENTNAHMEEINHEIT IM SANITÄRBEREICH**

(30) Priorität: 11.01.2024 DE 102024100748
(71) Anmelder: KWC Aquarotter GmbH, 14974 Ludwigsfelde (DE)
(72) Erfinder: Foels, Torsten, 15738 Zeuthen (DE); Urban, Rainer, 10777 Berlin (DE); Knörck, Thomas, 14547 Beelitz (DE); Witte, Christian, 14974 Ludwigsfelde-Wietstock (DE)
(74) Vertreter: Witte, Weller & Partner Patentanwälte mbB

(57) **Zusammenfassung**

Die vorliegende Erfindung betrifft eine Kommunikationsvorrichtung für eine elektronische Medienentnahmeeinheit im Sanitärbereich, insbesondere eine elektronische Sanitärarmatur, mit einer ersten Kommunikationsschnittstelle, die dazu eingerichtet ist, eine leitungsgebundene Datenverbindung mit einer Elektronikeinheit der elektronischen Medienentnahmeeinheit zu ermöglichen, und einer zweiten Kommunikationsschnittstelle, die mit der ersten Kommunikationsschnittstelle verbunden ist. Dabei ist die zweite Kommunikationsschnittstelle dazu eingerichtet, eine drahtlose Datenverbindung mit einer Steuervorrichtung für die Elektronikeinheit zu ermöglichen. Die Kommunikationsvorrichtung weist ferner eine dritte Kommunikationsschnittstelle auf, die dazu eingerichtet ist, eine Datenquerverbindung mit einer oder mehreren weiteren, insbesondere gleichartigen, Kommunikationsvorrichtungen zu ermöglichen.

## Beschreibung

Die Erfindung betrifft eine Kommunikationsvorrichtung für eine elektronische Medienentnahmeeinheit im Sanitärbereich, insbesondere eine elektronische Sanitärarmatur. Die Kommunikationsvorrichtung umfasst eine erste Kommunikationsschnittstelle und eine, mit der ersten Kommunikationsschnittstelle verbundene, zweite Kommunikationsschnittstelle, wobei die erste Kommunikationsschnittstelle dazu eingerichtet ist, eine leitungsgebundene Datenverbindung mit einer Elektronikeinheit der elektronischen Medienentnahmeeinheit zu ermöglichen und wobei die zweite Kommunikationsschnittstelle dazu eingerichtet ist, eine drahtlose Datenverbindung mit einer Steuervorrichtung für die Elektronikeinheit zu ermöglichen. Die Erfindung betrifft ferner ein System zur Steuerung und Überwachung elektronischer Medienentnahmeeinheiten im Sanitärbereich mit mehreren elektronischen Wasserentnahmeeinheiten, die jeweils eine Elektronikeinheit aufweisen, und mehreren Kommunikationsvorrichtungen. Darüber hinaus betrifft die Erfindung eine Verwendung eines Mesh-Netzwerkes, insbesondere eines Wirepas-Mesh-Netzwerkes, für ein System zur Steuerung und Überwachung elektronischer Medienentnahmeeinheiten im Sanitärbereich, insbesondere elektronischer Sanitärarmaturen.

Systeme zur Steuerung und Überwachung elektronischer Sanitärarmaturen in Gebäuden sind mittlerweile weit verbreitet. Sie dienen dazu, effizient Wassermanagement betreiben zu können und somit den bestimmungsgemäßen Betrieb der gesamten Trinkwasserinstallationsanlage im Gebäude optimal sicherstellen zu können. Dies ist insbesondere bei der Trinkwasserversorgung von Gebäuden relevant, da hier hohe Hygienestandards einzuhalten sind. Wasser beispielsweise, das über längere Zeit im Wasserleitungsnetzwerk steht, sogenanntes Stagnationswasser, kann nämlich zur Bildung ungewünschter Keime führen. In diesem Zusammenhang stellen Legionellen oder ähnliche Keime ein Gesundheitsrisiko dar. Aus diesem Grund ist dazu übergegangen worden, das betreffende Wasserleitungsnetzwerk regelmäßig zu spülen, was als Stagnationsspülen bezeichnet wird. Auch andere Funktionen das Wassermanagement betreffend, insbesondere ein sparsamer Umgang mit der natürlichen Ressource Wasser, können von derartigen Systemen übernommen werden.

Die Anmelderin hat ein System zur Steuerung elektronischer Sanitärarmaturen in Gebäuden entwickelt, das unter der Bezeichnung "AQUA 3000" bzw. "AQUA 3000 open" bekannt ist. Das System erlaubt es, Wassermengen, Hygienespülungen, thermische Desinfektionen und deren Temperaturgrenzwerte je Raum und sogar je Armatur individuell über eine zugehörige Software kontrollieren und einstellen zu können. Fehlfunktionen werden vom System gemeldet. Damit stellt das System ein Wassermanagement bereit und erlaubt so einen sparsamen Betrieb aller angeschlossenen Komponenten. Anschließen lassen sich Dusch-, Wasch- und Spülarmaturen. Das System findet Einsatz in Krankenhäusern, Bürogebäuden, Schulen, Flughäfen, militärischen Einrichtungen usw.

Das System ist hierarchisch in eine Managementebene, eine Gebäudeebene und eine Armaturenebene unterteilt.

Auf der Armaturenebene vollziehen sich alle für den Benutzer erforderlichen Wasserlauffunktionen mittels geeigneter Sanitärarmaturen (in der Regel Sanitärarmaturen mit sogenannten IR-Gruppenelektroniken). Über ein Kabel werden die busfähigen elektronischen Sanitärarmaturen in das Datenübertragungsnetzwerk für die Steuerung und Überwachung eingebunden und außerdem mit der für ihren Betrieb erforderlichen Spannung versorgt.

Auf der Gebäudeebene erfolgt über sogenannte Funktionscontroller, die jeweils über einen Feldbus mit mehreren Sanitärarmaturen verbunden sind, das Erfassen, Überwachen, Regeln, Steuern und Optimieren aller sanitärtechnischen Wasserlauffunktionen. Spitzenlastoptimierungen, Folgesteuerungen sowie das Wartungsmanagement und Sicherheitsmaßnahmen sind hierbei die wichtigsten Aufgabenbereiche. Die Funktionscontroller sind in der Regel in Technikräumen, insbesondere Kellerräumen, des Gebäudes untergebracht.

Auf der obersten Ebene, der Managementebene, erfolgt das Bedienen, Beobachten, Analysieren und Protokollieren aller sanitärtechnischen Prozesse. Die Managementebene wird in der Regel durch eine zentral, ebenfalls regelmäßig im Technikraum des Gebäudes untergebrachte, Steuervorrichtung, beispielsweise einen PC, gebildet.

Die Funktionscontroller können in diesem System als Kommunikationsvorrichtungen betrachtet werden, die eine Kommunikation zwischen der Managementebene und der Armaturenebene ermöglichen.

Das bekannte System erfordert, wie vorstehend erwähnt, eine Leitungsverbindung von der Managementebene zu jeder einzelnen Sanitärarmatur. Es besteht aber auch die Möglichkeit einer Fernsteuerung der Funktionscontroller.

Die DE 10 2017 105 449 A1 betrifft ein Verfahren zur Steuerung eines Gebäudewasserversorgungssystems, das im montierten Zustand an ein Wasserleitungsnetzwerk eines Gebäudes angeschlossen ist, wobei das Gebäudewasserversorgungssystem mehrere Sanitärarmaturen aufweist, wobei den Sanitärarmaturen jeweils ein Armaturaktuator, insbesondere ein Armaturventil, mit einer elektronischen Armatursteuerung zugeordnet ist, der zum Spülen zumindest eines Teils des Wasserleitungsnetzwerks in Spülaktivitäten von der Armatursteuerung angesteuert wird, wobei das Gebäudewasserversorgungssystem eine elektronische Zentralsteuerung aufweist, die über, insbesondere bidirektionale, Datenverbindungen ein Datennetzwerk mit den Armatursteuerungen ausbildet. Es wird vorgeschlagen, dass im Normalbetrieb die Armatursteuerungen und damit die Armaturaktuatoren von der Zentralsteuerung nach einer globalen Spülstrategie angesteuert werden und dass im Störungsbetrieb bei zumindest teilweisem Wegfall der Zentralsteuerung zumindest ein Teil der Armaturaktuatoren von den zugeordneten Armatursteuerungen autonom nach einer jeweils lokalen Spülstrategie angesteuert wird. Die Datenverbindungen können leitungsbasiert oder funkbasiert erzeugt werden.

Die DE 10 2017 116 604 A1 betrifft ein Verfahren zur Ansteuerung eines Gebäude-Trinkwassernetzwerks mittels eines Steuersystems, wobei das Gebäude-Trinkwassernetzwerk mehrere elektrisch ansteuerbare Wasserauslassstellen aufweist, die mit dem Steuersystem jeweils über mindestens einen Kommunikationspfad gekoppelt sind, wobei mittels des Steuersystems über die Kommunikationspfade die Wasserauslassstellen automatisch betätigbar und der Betätigungszustand der Wasserauslassstellen ermittelbar sind. Je nach Ausgestaltung des Steuersystems sind die Kommunikationspfade leitungsbasiert und/oder funkbasiert vorgesehen. Insgesamt ergibt sich das Problem, dass ein Hinzufügen weiterer elektrisch betriebener Armaturen in das System nicht ohne weiteres möglich ist, insbesondere dann, wenn eine Stelle, an der die neue Armatur angeordnet werden soll, physisch schwer zugänglich ist oder vom drahtlosen Netzwerk einer Zentralsteuerung nicht mehr abgedeckt ist. Eine entsprechende Nachrüstung kann daher mit hohem Planungsaufwand und Installationsaufwand verbunden sein. Zudem kann insbesondere für Armaturen, die sich weiter weg von der Zentralsteuerung befinden, eine zuverlässige und effiziente Datenverbindungen nicht gewährleistet werden.

Der Erfindung liegt daher die Aufgabe zugrunde, die Steuerung und Überwachung elektronischer Medienentnahmeeinheiten im Sanitärbereich, insbesondere elektronischer Wasserentnahmeeinheiten wie Sanitärarmaturen, zuverlässiger und effizienter zu gestalten. Ebenso sollen zusätzliche Entnahmeeinheiten ohne größeren Planungs- und Installationsaufwand in zuverlässiger Weise in ein bestehendes Steuer- und Überwachungssystem integriert werden können.

Gemäß einem Aspekt der Erfindung wird diese Aufgabe durch eine Kommunikationsvorrichtung für eine elektronische Medienentnahmeeinheit im Sanitärbereich gelöst, die eine dritte Kommunikationsschnittstelle aufweist, die dazu eingerichtet ist, eine Datenquerverbindung mit einer oder mehreren weiteren, insbesondere gleichartigen, Kommunikationsvorrichtungen zu ermöglichen.

Ferner wird die Aufgabe durch ein System zur Steuerung und Überwachung elektronischer Medienentnahmeeinheiten im Sanitärbereich gelöst, bei dem die Kommunikationsvorrichtungen erfindungsgemäß ausgebildet sind und untereinander in Datenquerverbindung stehen.

Darüber hinaus wird die Aufgabe durch Verwendung eines Mesh-Netzwerkes, insbesondere eines Wirepas-Mesh-Netzwerkes, für ein System zur Steuerung und Überwachung elektronischer Medienentnahmeeinheiten im Sanitärbereich, insbesondere elektronischer Sanitärarmaturen, also ein Medienmanagementsystem (bspw. ein Wassermanagementsystem), gelöst.

Vorteilhafte Ausgestaltungen und Weiterbildungen der Erfindung ergeben sich aus den abhängigen Ansprüchen.

Als Medienentnahmeeinheiten im Sanitärbereich kommen insbesondere eine Wasserentnahmeeinheiten, also Wascharmaturen, Duscharmaturen, WC-Armaturen, Urinalspülarmaturen und dergleichen, in Betracht. Das der Entnahmeeinheit entnehmbare Medium ist aber nicht auf Wasser beschränkt. Denkbar sind auch andere flüssige Medien wie Flüssigseife, Lotionen, Reinigungs- und Desinfektionsmittel usw. Ebenso sind feste Medien wie Hartseifen oder Spültabs denkbar. Ferner kommen auch gasförmige Medien in Betracht wie Luft, insbesondere Heißluft, bei Hände- oder Haartrocknern beispielsweise in Betracht, oder Ozon (zu Desinfektionszwecken). Insofern fällt unter den Begriff Medienentnahmeeinheit im Sanitärbereich eine Vielzahl sanitärer Entnahmeeinheiten.

Die erste Kommunikationsschnittstelle und die zweite Kommunikationsschnittstelle sind vorzugsweise über eine leitungsgebundene Verbindung miteinander verbunden, wenngleich prinzipiell auch eine drahtlose Verbindung denkbar ist. Die dritte Kommunikationsschnittstelle ist zumindest mit der zweiten Kommunikationsschnittstelle verbunden, vorzugsweise aber auch mit der ersten Kommunikationsschnittstelle. Die Verbindung zwischen der dritten Kommunikationsschnittstelle und der ersten und/oder zweiten Kommunikationsschnittstelle ist vorzugsweise leitungsgebunden, kann aber auch drahtlos ausgebildet sein.

Es ist denkbar, dass die zweite Kommunikationsschnittstelle und die dritte Kommunikationsschnittstelle keine separaten Schnittstellen sind. Mit anderen Worten können die beiden Schnittstellen einander entsprechen.

Die erfindungsgemäße dritte Kommunikationsschnittstelle kann als Schnittstelle für eine drahtlose oder eine leitungsgebundene Datenquerverbindung ausgebildet sein. Dementsprechend kann die Kommunikationsvorrichtung mit einer oder mehreren anderen Kommunikationsvorrichtungen jeweils über ein Kabel oder jeweils drahtlos verbunden sein. Über die dritte Kommunikationsschnittstelle kann also mit einer oder mehreren anderen Kommunikationsvorrichtungen ein Datennetzwerk (aufweisend eine oder mehrere Datenquerverbindungen) aufgebaut werden. Somit kann über die dritte Kommunikationsschnittstelle ein Datenaustausch zwischen zwei oder mehr Kommunikationsvorrichtungen ermöglicht werden.

Die zweite Kommunikationsschnittstelle ist vorzugsweise als Schnittstelle für Funksignale ausgebildet. Damit kann eine Funkverbindung zwischen der Kommunikationsvorrichtung und der Steuervorrichtung ermöglicht werden. Vorzugsweise sollen die über die zweite Kommunikationsschnittstelle übertragenen Funksignale derart sein, dass sie von gängigen Mobilgeräten unterstützt werden. Dementsprechend soll die zweite Kommunikationsschnittstelle vorzugsweise dazu eingerichtet sein, eine Bluetooth-, eine Zigbee-, eine WiFi-, eine 2,4 GHz- und/oder 5 GHz-Funkverbindung, eine DECT-, eine EEBUS-, und/oder eine IEEE-Verbindung zwischen der Kommunikationsvorrichtung und der Steuervorrichtung zu ermöglichen. Besonders bevorzugt ist die zweite Kommunikationsschnittstelle dazu eingerichtet, Funksignale im Sub-GHz-Bereich (etwa im Bereich zwischen 800 und 950 MHz) zu übertragen.

Durch die Ausbildung der zweiten Kommunikationsschnittstelle als Drahtlos-Schnittstelle ist die Kommunikationsvorrichtung in der Lage direkt mit der Steuervorrichtung in drahtloser Weise zu kommunizieren. Die Steuervorrichtung ist nicht zwangsweise ortsgebunden und kann daher mobil sein. Als Steuervorrichtung kann somit ein Smartphone, eine Smartwatch, ein Tablet oder dergleichen mit einer entsprechenden Steuerungssoftware verwendet werden. Dies ermöglicht eine bequeme Handhabe des Medienmanagements (z.B. Wassermanagements). Die erste Kommunikationsschnittstelle ist vorzugsweise dazu eingerichtet, mit der Elektronikeinheit in einer Eins-zu-Eins-Verbindung zu stehen. In diesem Fall ist vorgesehen, dass die Kommunikationsvorrichtung lediglich an eine einzige elektronische Medienentnahmeeinheit angeschlossen wird. Dies führt zu einer enormen Entlastung hinsichtlich Steuerungs- und Überwachungsaufgaben gegenüber Medienmanagementsystemen im Sanitärbereich, bei denen die Kommunikationsvorrichtung eine Vielzahl elektronischer Medienentnahmeeinrichtungen steuern und überwachen muss. Im Aqua-3000-System, beispielsweise, ist ein Funktionscontroller für die Funktion von bis zu 32 Sanitärarmaturen verantwortlich. Zur Bewältigung dieser Aufgabe wird ein weitverzweigtes Bussystem herangezogen. Durch die erfindungsgemäße Eins-zu-eins-Zuordnung kann nun auf ein kompliziertes Bussystem verzichtet werden.

Es ist vorgesehen, dass Daten der Elektronikeinheit, insbesondere Parameter der Elektronikeinheit, zwischen der Elektronikeinheit und der Steuervorrichtung über die erste Kommunikationsschnittstelle und die zweite Kommunikationsschnittstelle übertragen werden können. Insbesondere kann die Kommunikationsvorrichtung dazu eingerichtet sein, Daten von der Elektronikeinheit über die erste Kommunikationsschnittstelle zu empfangen und auszulesen. Ebenso kann vorgesehen sein, dass die Kommunikationsvorrichtung über die erste Kommunikationsschnittstelle Daten an die Elektronikeinheit (schreiben und) senden kann. Analoges gilt für den Datenaustausch mit der Steuervorrichtung. Die Kommunikationsvorrichtung kann vorzugsweise über die zweite Kommunikationsschnittstelle Daten an die Steuervorrichtung senden und/oder von dieser empfangen. Ferner ist vorgesehen, dass innerhalb der Kommunikationsvorrichtung Daten zwischen der ersten Kommunikationsschnittstelle und der zweiten Kommunikationsschnittstelle ausgestaucht werden können. Insbesondere können mithin Daten von der Steuervorrichtung über die beiden Kommunikationsschnittstellen an die Elektronikeinheit übertragen werden (und/oder umgekehrt). Dementsprechend kann die erste Kommunikationsschnittstelle als Sender und/oder Empfänger von Daten ausgebildet sein. Gleiches gilt für die zweite Kommunikationsschnittstelle.

Die dritte Kommunikationsschnittstelle kann ebenso als Sender und/oder Empfänger von Daten ausgestaltet sein. Insbesondere ist vorgesehen, dass die zweite Kommunikationsschnittstelle mit der dritten Kommunikationsschnittstelle zum Datenaustausch verbunden ist. Demensprechend können nicht nur Daten von der Steuervorrichtung an die Kommunikationsvorrichtung selbst übermittelt werden, sondern es können über die zweite und die dritte Kommunikationsschnittstelle auch Daten von der Steuervorrichtung an eine andere Kommunikationsvorrichtung (oder mehrere andere Kommunikationsvorrichtungen) übermittelt werden, ohne dass die Steuervorrichtung diese direkt ansprechen muss. Vorzugsweise sind die erste Kommunikationsschnittstelle, die zweite Kommunikationsschnittstelle und/oder die dritte Kommunikationsschnittstelle dazu eingerichtet, eine bidirektionale Datenverbindung zu ermöglichen. Das heißt, es können beispielsweise Anweisungen von der Steuervorrichtung an die Kommunikationsvorrichtung und von dieser weiter an die Medienentnahmeeinheit zu deren Steuerung übertragen werden und Zustandsmeldungen von der Medienentnahmeeinheit über die Kommunikationsvorrichtung an die Steuervorrichtung zur Überwachung der Medienentnahmeeinheit übertragen werden. Mit anderen Worten, insbesondere dann, wenn beide Kommunikationsschnittstellen eine bidirektionale Datenkommunikation ermöglichen (bzw. als bidirektionale Kommunikationsschnittstellen ausgebildet sind), ist gewährleistet, dass Parameter der Elektronikeinheit nicht nur ausgelesen, sondern auch verändert und an jeweilige Situationen angepasst werden können (und umgekehrt). Wenn die dritte Kommunikationsschnittstelle eine bidirektionale Datenverbindung zulässt, können Daten von der Kommunikationsvorrichtung an eine oder mehrere andere Kommunikationsvorrichtungen gesandt und von diesen empfangen werden. Dementsprechend wird ermöglicht, dass eine Steuervorrichtung Anweisungen über die Kommunikationsvorrichtung an eine andere Kommunikationsvorrichtung bzw. deren zugeordneter Elektronikeinheit (einer anderen Medienentnahmeeinheit) übermitteln kann und ferner beispielsweise Statistikdaten von dieser anderen Kommunikationsvorrichtung erhalten kann.

Bei den über die Kommunikationsschnittstellen übermittelten Daten handelt es sich vorzugsweise um Parameter der Elektronikeinheit(en), wobei die Anzahl der Parameter einer Elektronikeinheit über 100 Parameter umfassen kann. Darunter fallen Parameter hinsichtlich Armatureneinstellungen (bspw. Fließzeit, Nachlaufzeit, Sicherheitsabschaltung), Reinigungseinstellungen (bspw. Reinigungsabschaltung/-einschaltung, Reinigungszeit), Hygieneeinstellungen (bspw. Hygienespülungsabschaltung/-einschaltung, Hygienespülungsintervall), Einstellungen zur thermischen Desinfektion (bspw. Einwirkzeit, Abkühlzeit, Wassersparfunktion), Einstellungen bezüglich Beckenbefüllung (bspw. Beckenbefüllungszeit) und Parameter in Bezug auf Sonderfunktionen (bspw. Körpererkennung, Betriebsart und dergleichen). Weitere Parameter können Tasterfunktionen betreffen, die Ansteuerung von in der Armatur verbauten Magnetventilen oder die Ansteuerung von Seifenpumpen. Wichtige Parameter der Elektronikeinheit(en) sind auch Statistik-Daten der Armatur, wobei die Statistikdaten die Anzahl der Auslösungen der Armatur insgesamt, die Anzahl von Hygienespülungen oder thermischen Desinfektionen betreffen kann. Viele weitere Parameter sind denkbar, etwa den Zustand einer Batterie betreffend bei batteriebetriebenen Medienentnahmeeinheiten, sodass die genannte Auflistung keinen Anspruch auf Vollständigkeit erhebt. Über die Parameter bzw. deren Weiterleitung über die Kommunikationsvorrichtung können Informationen oder Funktionen der Elektronikeinheit(en) ausgelesen und/oder verändert werden. Insofern kann die Kommunikationsvorrichtung eine Parametrierung elektronischer Medienentnahmeeinheiten durch die Steuervorrichtung erheblich vereinfachen. Grundsätzlich können die Daten der Elektronikeinheit(en) auch Produktinformationsdaten, Statistikdaten und/oder Zeitplanungsdaten umfassen. Statistikdaten können beispielsweise Informationen umfassen, die angeben, wie oft die elektronische Medienentnahmeeinheit betätigt wird, wie oft Hygienespülungen durchgeführt werden, sie hoch die durchschnittliche Temperatur entnommener Medien, insbesondere Wasser, ist usw. Weitere Datenarten sind ebenso denkbar

Insofern kann die Kommunikationsvorrichtung dazu beitragen, dass auf einer (insbesondere mobilen) Steuervorrichtung beispielsweise Parameter verschiedener Medienentnahmeeinheiten angezeigt und/oder geändert werden können, dass Statistikdaten der Medienentnahmeeinheiten angezeigt und/oder gespeichert werden können und/oder dass Firmware der Medienentnahmeeinheiten geändert werden kann, ohne dass eine direkte Verbindung zu sämtlichen genannten Medienentnahmeeinheiten notwendig ist. Demensprechend können auch entlegene Medienentnahmeeinheiten, auf die von der Steuervorrichtung kein direkter Zugriff möglich ist, gesteuert und überwacht werden.

Die oben genannte Aufgabe ist daher vollständig gelöst.

In einer bevorzugten Ausführungsform ermöglicht die dritte Kommunikationsschnittstelle die Datenquerverbindung als drahtlose Datenquerverbindung. Diese Ausführungsform hat den Vorteil, dass auf eine Verdrahtung der Kommunikationsvorrichtung mit anderen Kommunikationsvorrichtungen verzichtet werden kann. Bauliche Maßnahmen, beispielsweise das Verlegen von Kabeln unter Putz, sind daher nicht notwendig. Bestehende Systeme können somit mit neuen Kommunikationsvorrichtungen in einfacher Weise ergänzt bzw. nachgerüstet werden. Die dritte Kommunikationsschnittstelle kann beispielsweise eine Bluetooth-, eine Zigbee-, eine WiFi-, eine 2,4 GHz- und/oder 5 GHz-Funkverbindungs-, eine DECT-, eine EEBUS-, und/oder eine IEEE-Verbindungsschnittstelle sein. Vorzugsweise ist die dritte Kommunikationsschnittstelle dazu eingerichtet, eine drahtlose Datenverbindung mit einer anderen Kommunikationsvorrichtung aufzubauen, die bis zu 10m, bevorzugt bis zu 20m, insbesondere bevorzugt bis zu 50m, entfernt ist.

In einer weiteren Ausführungsform ist die dritte Kommunikationsschnittstelle eine Mesh-Netzwerk-Schnittstelle. Das heißt, die dritte Kommunikationsschnittstelle ermöglicht eine Daten(quer)verbindung mit einer anderen Kommunikationsvorrichtung über ein Mesh-Netzwerk. Mesh-Netzwerke bieten gegenüber gewöhnlichen drahtlosen Netzwerken den Vorteil, dass kein zentraler Access Point benötigt wird. Vielmehr kann jede Kommunikationsvorrichtung im Mesh-Netzwerk Daten direkt an andere Kommunikationsvorrichtungen senden (und von diesen empfangen). Aufgrund ihrer Topologie sind Mesh-Netzwerke gegenüber gewöhnlich Netzwerken (d.h. Netzwerken mit zentralem Access Point) zuverlässiger und flexibler. Verbindungsabbrüche und Geschwindigkeitseinbußen kommen deutlich seltener vor. Wenn die Kommunikationsvorrichtung als Teil eines Mesh-Netzwerks ausgebildet ist, dient die Kommunikationsvorrichtung gleichermaßen als Relais, das Daten an andere Netzwerkteilnehmer (insbesondere Kommunikationsvorrichtungen) weiterleiten kann. Wenn in einem Mesh-Netzwerk ein Relais ausfällt oder gestört wird, ist vorgesehen, dass die Daten über einen alternativen Pfad zum Ziel gelangen.

In einer bevorzugten Ausführungsform handelt es sich bei der Mesh-Netzwerk-Schnittstelle um eine Wirepas-Mesh-Netzwerk-Schnittstelle. Das heißt, die dritte Kommunikationsschnittstelle ist als Schnittstelle für eine Wirepas-Mesh-Netzwerk ausgebildet. Dementsprechend weist die Kommunikationsvorrichtung vorzugsweise einen Wirepas-Kommunikations-Chip auf. Dieser ist dazu eingerichtet über die Wirepas-Mesh-Netzwerk-schnittstelle mit anderen Kommunikationsvorrichtungen (mit Wirepas-Chips) ein Wirepas-Netzwerk aufzubauen. Wirepas-Mesh ist im Vergleich zu anderen Mesh-Netzwerken flexibler und besser skalierbar. Es ermöglicht eine einfache Integration von einer Vielzahl von Geräten in einem Netzwerk. Diese Skalierbarkeit macht es besonders gut geeignet für Anwendungen im Internet der Dinge (engl. "internet of things; "IoT"), bei denen eine große Anzahl von Geräten, wie vorliegend Kommunikationsvorrichtungen, miteinander kommunizieren muss. Wirepas-Mesh-Netzwerke sind darüber hinaus "selbstheilend", was bedeutet, dass das Netzwerk automatisch Anpassungen vornimmt, um Ausfälle zu beheben. Dies verbessert die Zuverlässigkeit und Robustheit des Netzwerks, da es sich dynamisch an Änderungen in der Netzwerktopologie anpassen kann. Herausragend bei Mesh-Netzwerken ist ferner deren Energieeffizienz. Dies ermöglicht nicht nur die Kommunikationsvorrichtung(en) mit einer Batterie zu betreiben, sondern verlängert auch die Lebensdauer der batteriebetriebenen loT-Geräte. Zudem weist Wirepas-Mesh als Vorteil auf, dass es mit verschiedenen Hardwareplattformen und anderen drahtlosen Technologien integriert werden kann.

Denkbar ist aber auch, dass die dritte Kommunikationsschnittstelle als Schnittstelle für ein Bluetooth-Mesh-Netzwerk, ein Thread-Mesh-Netzwerk, ein Zigbee-Mesh-Netzwerk, ein Z-Wave-Mesh-Netzwerk oder Ähnliches ausgebildet ist.

Besonders bevorzugt ist die Kommunikationsvorrichtung dazu eingerichtet, über eine Gleichspannungsquelle mit Strom versorgt zu werden. Dabei ist vorgesehen, dass die Kommunikationsvorrichtung einen elektrischen Anschluss im Weitspannungsbereich von 5 V DC und 12 V DC aufweist. Die Kommunikationsvorrichtung ist vorzugsweise dazu eingerichtet, über eine (handelsübliche) Batterie, beispielsweise über eine CR-P2 Batterie, mit Strom versorgt zu werden. In einer bevorzugten Ausführungsform weist die Kommunikationsvorrichtung ein (entsprechendes) Batteriefach auf.

Denkbar ist aber auch, dass die Kommunikationsvorrichtung netzbetrieben ist, d.h. mit Wechselstrom betreibbar ist. Prinzipiell kann die Kommunikationsvorrichtung aber auch über eine zwei-polige oder drei-polige Steckverbindung an ein Netzteil angeschlossen werden. Demensprechend ist bei einem Netzteil-Betrieb besonders bevorzugt vorgesehen, dass die Kommunikationsvorrichtung einen Anschluss für ein Netzteil aufweist, wobei der Anschluss als zwei-polige bzw. drei-polige Buchse oder zwei-poliger bzw. drei-poliger Stecker ausgebildet ist.

Die Kommunikationsvorrichtung kann dazu eingerichtet sein, sich mit der Elektronikeinheit eine Gleichspannungsquelle, insbesondere eine Batterie oder ein Netzteil, zu teilen.

In einer bevorzugten Ausführungsform ist die Kommunikationsvorrichtung dazu eingerichtet, über die Datenquerverbindung Vorrichtungsinformationsdaten von der einen oder den mehreren anderen Kommunikationsvorrichtungen zu erhalten und die Vorrichtungsinformationsdaten mit eigenen Vorrichtungsinformationsdaten zu vergleichen und, basierend auf dem Vergleich, sich als Master zu bestimmen. In ähnlicher Weise kann vorgesehen sein, dass sich die Kommunikationsvorrichtung basierend auf dem Vergleich als Slave bestimmt. Mit anderen Worten ist vorgesehen, dass sich in einem System bzw. Netzwerk mit mehreren Kommunikationsvorrichtungen ein Master (oder Slave) für das Netzwerk selbst bestimmt. Prinzipiell könnte die Kommunikationsvorrichtung aber auch dazu eingerichtet sein, Informationen darüber zu erhalten, ob sie als Master (oder Slave) (von einer anderen Einheit) bestimmt ist oder nicht. Eine als Master bestimmte Kommunikationsvorrichtung ist beispielsweise dazu eingerichtet, eine aktuelle Auslastung der Kommunikationsvorrichtungen im Netz zu ermitteln, deren Sende- und/oder Empfangsstärken zu ermitteln und/oder zu ermitteln, mit welcher Kommunikationsvorrichtung eine Steuervorrichtung verbunden ist. Mit anderen Worten ist eine als Master bestimmte Kommunikationsvorrichtung dazu eingerichtet, ein Netzwerk von vielen Kommunikationsvorrichtungen zu organisieren bzw. zu managen.

Bevorzugt handelt es sich bei den Vorrichtungsinformationsdaten um Kennungsdaten und/oder Energieversorgungsdaten. Dabei kann die Verwendung von Energieversorgungsdaten für den Vergleich bevorzugt sein bzw. priorisiert werden. Beispielsweise kann sich die Kommunikationsvorrichtung als Master bestimmen, wenn ihre Energieversorgung im Vergleich zur Energieversorgung anderer Kommunikationsvorrichtungen am besten gesichert ist, weil beispielsweise die Batterie der Kommunikationsvorrichtung am wenigsten entladen ist. Wenn keine Energieversorgungsdaten zur Verfügung stehen, ist bevorzugt vorgesehen, dass Kennungsdaten als Vorrichtungsinformationsdaten verwendet werden. Die Kennungsdaten können für jede Kommunikationsvorrichtung eine eindeutige Kennziffer aufweisen, wobei beispielsweise diejenige Kommunikationsvorrichtung, welcher die niedrigste Kennziffer zugeordnet ist, sich als Master bestimmen kann.

In einer Ausführungsform ist die Kommunikationsvorrichtung dazu eingerichtet, die eine oder die mehreren anderen Kommunikationsvorrichtungen einer oder mehreren Funktionsgruppen zuzuordnen. Präziser ausgedrückt, kann die Kommunikationsvorrichtung über eine Steuerung mit entsprechenden Daten versorgt werden. Die Kommunikationsvorrichtung kann die Daten dann an die als Master bestimmte Kommunikationsvorrichtung (über die Datenquerverbindungen) weiterleiten, so dass der Master dann z.B. einen ersten Teil der anderen Kommunikationsvorrichtungen einer ersten Funktionsgruppe zuordnen und einen zweiten Teil der anderen Kommunikationsvorrichtungen einer zweiten Funktionsgruppe zuordnen kann bzw. entsprechende Anweisungen an die Kommunikationsvorrichtungen übermitteln kann. Insofern findet die Zuordnung der Kommunikationsvorrichtungen in einer Betrachtung im sog. OSI-Referenzmodell auf der Applikationsebene statt (nicht auf darunter liegenden Ebenen). Eine Zuordnung zu Funktionsgruppen kann die Steuerung und Überwachung anderer Elektronikeinheiten wesentlich vereinfachen, beispielweise dann, wenn Daten, die zu einer Funktionsgruppe gehören, nicht für alle Funktionsgruppenmitglieder vorgehalten werden müssen, sondern lediglich als einmaliger Datensatz für die gesamte Gruppe oder für ein einziges Gruppenmitglied, wobei dieses Gruppenmitglied dann damit beauftragt wird, die Daten die Funktionsgruppe betreffend an alle anderen Gruppenmitglieder weiterzuleiten.

In diesem Sinne kann eine Kommunikationsvorrichtung mit Hilfe der Master- Kommunikationsvorrichtung dazu eingerichtet sein, die mit dem Master querverbundenen anderen Kommunikationsvorrichtungen in eine erste Funktionsgruppe "Herrentoiletten", eine zweite Funktionsgruppe "Damentoiletten" und eine dritte Funktionsgruppe "restliche Wasserentnahmestellen" einzuteilen. Insofern kann der Master beispielsweise dazu eingerichtet sein, Statistikdaten der Kommunikationsvorrichtungen der Funktionsgruppe "Herrentoiletten" und Statistikdaten der Funktionsgruppe "Damentoiletten" einzuholen und miteinander zu vergleichen. Ferner kann vorgesehen sein, dass der Master die Vergleichsdaten zur Auswertung dann an die Steuervorrichtung (über die besagte Kommunikationsvorrichtung) weiterleitet. Andersherum können über die Steuervorrichtung sämtliche Kommunikationsvorrichtungen der Funktionsgruppe "Damentoiletten" in einfacher Weise über eine einzige Kommunikationsvorrichtung angesprochen werden. Beispielsweise kann eine Anweisung zum Spülen der jeweilig zugeordneten elektronischen Medienentnahmeeinheiten über den Master an sämtliche Kommunikationsvorrichtungen der Funktionsgruppe "Damentoiletten" übermittelt werden.

Ein Firmware-Update der einzelnen Kommunikationsvorrichtungen kann ebenso dadurch erfolgen, dass das Update z.B. (von der Steuervorrichtung) an die nächstgelegene Kommunikationsvorrichtung übermittelt wird. Diese gibt die entsprechenden Daten dann an den Master weiter und dieser sorgt dann dafür, dass sämtliche mit ihm verbundenen Kommunikationsvorrichtungen ein entsprechendes Update erhalten.

Eine wichtige Aufgabe des Masters kann ferner darin bestehen, bei (anderen) Kommunikationsvorrichtungen (einer Funktionsgruppe z.B.) eine Zeitsynchronisation in deren Zeitplaner durchzuführen. Vorzugsweise erfolgt die Synchronisation in regelmäßigen Zeitabständen. Darüber hinaus kann vorgesehen sein, dass über den Master in anderen Kommunikationsvorrichtungen Einträge im Zeitplaner vorgenommen werden. So kann erreicht werden, dass Funktionsgruppen eine zeitlich synchronisierte Funktionsweise aufweisen. In einer bevorzugten Ausführungsform der Kommunikationsvorrichtung weist die erste Kommunikationsschnittstelle ein erstes Verbindungselement für eine Verbindung mit einem zweiten Verbindungselement der Elektronikeinheit auf. Dementsprechend kann die Kommunikationsvorrichtung räumlich sehr nah an der Medienentnahmeeinheit angebracht werden. Eine weitläufige Verkabelung wie bei bekannten Systemen ist nicht notwendig. Vorzugsweise handelt es sich bei dem ersten Verbindungselement um ein erstes Steckverbindungselement, bei dem zweiten Verbindungselement um ein zweites Steckverbindungselement und bei der Verbindung beider Elemente um eine Steckverbindung. Eine Steckverbindung ermöglicht einen sehr einfachen Anschluss der Kommunikationsvorrichtung an die Medienentnahmeeinheit. Besonders bevorzugt handelt es sich bei den Steckverbindungelementen um einen drei-poligen Stecker bzw. um eine 3-polige Buchse.

In einer bevorzugten Ausführungsform der Kommunikationsvorrichtung ist die erste Kommunikationsschnittstelle als Bus-Verbindungsschnittstelle, insbesondere als Eindraht-Bus-Verbindungsschnittstelle, ausgebildet. Vorzugsweise ist die erste Kommunikationsschnittstelle für digitale Busse, insbesondere Eindraht-Busse, mit einer Signalübertragungsrate von mindestens 1200 Baud ausgelegt. Da Eindraht-Busse nur eine physikalische Leitung zur Datenübertragung benötigen, ist die Verkabelung einfach und der Installationsaufwand somit stark begrenzt. Da die Kommunikationsvorrichtung möglichst nah an der Elektronikeinheit, beispielsweise unter einer Waschtischarmatur, angebracht werden soll, ist eine einfache Verkabelung wünschenswert. Zudem haben Eindraht-Busse den Vorteil, dass Aktoren und Sensoren einfach zu integrieren sind, dass sie einen niedrigen Energieverbrauch aufweisen und zudem kostengünstig sind. Insofern kann in dieser Ausführungsform eine elektronische Medienentnahmeeinheit in besonders einfacher Weise an ein bestehendes Steuerungs- und Überwachungssystem für derartige Medienentnahmeeinheiten angebunden und somit kommunikationsfähig gemacht werden.

Was den genannten Eindraht-Bus angeht, ist die Kommunikationsvorrichtung vorzugsweise als Master eines durch die Eindraht-Bus-Verbindung gebildeten Master-Slave-Systems ausgebildet. Das heißt, die Kommunikationsvorrichtung erwartet als Master eine Reaktion bzw. Antwort von der als Slave vorgesehenen Elektronikeinheit.

In einer weiteren Ausführungsform ist die Kommunikationsvorrichtung dazu eingerichtet, in einem Gehäuse der Elektronikeinheit untergebracht zu werden. Damit ist die Kommunikationsvorrichtung nicht nur optisch verborgen, sondern auch vor äußeren Einflüssen wie Spritzwasser oder dergleichen optimal geschützt. Ferner bietet diese Anordnung den Vorteil, dass die Datenverbindungsstrecke zwischen Kommunikationsvorrichtung und Elektronikeinheit auf ein Minimum reduziert werden kann. Da das Gehäuse der Elektronikeinheit in der Regel im Wesentlichen aus Metall besteht, sollte die drahtlose Datenverbindung zur Steuervorrichtung und/oder zu anderen Kommunikationsvorrichtungen auf möglichst niederfrequenten Funksignalen basieren.

Die Unterbringung der Kommunikationsvorrichtung im Gehäuse der Elektronikeinheit erfordert auch eine möglichst geringe Baugröße. Unabhängig von dieser Unterbringung ist eine möglichst geringe Baugröße der Kommunikationsvorrichtung aber auch sonst wünschenswert. Die Kommunikationsvorrichtung weist vorzugsweise eine Leiterplatte mit der ersten Kommunikationsschnittstelle und der zweiten Kommunikationsschnittstelle auf. Die erste Kommunikationsschnittstelle und die zweite Kommunikationsschnittstelle sind vorzugsweise als SMD (surface-mounted device)-Bauteile ausgebildet, da diese gegenüber sog. Through-Hole-Äquivalenten eine geringere Baugröße aufweisen. Gleiches soll für weitere Komponenten der Kommunikationsvorrichtung gelten, wie beispielweise einen Datenspeicher. Die Leiterplatte sowie die Kommunikationsschnittstellen (und möglicherweise weitere Komponenten der Kommunikationsvorrichtung) sind vorzugsweise RoHS2- und REACH-konform.

In einer besonders bevorzugten Ausführungsform weist die Kommunikationsvorrichtung eine Uhr, insbesondere eine Echtzeit-Uhr, auf. Damit können zeitgenaue Ansteuerungen, z.B. zeitgesteuerte Spülungen, in einfacher Weise realisiert werden. Vorzugsweise soll die Uhr durch einen internen Energiespeicher bei Spannungsausfall für mindestens 6, bevorzugt mindestens 12, insbesondere bevorzugt mindestens 24 Stunden weiterlaufen. Als interner Energiespeicher kann beispielsweise eine Batterie vorgesehen sein.

Vorzugsweise weist die Kommunikationsvorrichtung ferner ein Gehäuse auf, welches die Kommunikationsvorrichtung (insbesondere deren Leiterplatte) vor äußeren Einwirkungen, insbesondere mechanischen oder chemischen Einwirkungen, schützt. Das Gehäuse ist bevorzugt staub- und wasserdicht und erfüllt mindestens den Schutzgrad IP68. Weiterhin ist bevorzugt vorgesehen, dass sich das Gehäuse unter Einwirkung einer relativen Luftfeuchtigkeit von weniger als 95% und einer Temperatur weniger als 80°C nicht verformt. Beispielsweise weiset das Gehäuse eine (voll)gummierte Ummantelung auf oder wird durch ein gegossenes Kunststoffgehäuse gebildet. Das Gehäuse ist vorzugsweise resistent gegen gängige Reinigungsmittel.

Weiterhin weist die Kommunikationsvorrichtung in einer bevorzugten Ausführungsform einen Datenspeicher zur Speicherung der Daten auf. Vorzugsweise ist sind die erste, die zweite und/oder die dritte Kommunikationsschnittstelle mit dem Datenspeicher verbunden.

Es ist vorzugsweise vorgesehen, dass die zweite Kommunikationsschnittstelle dazu eingerichtet, eine drahtlose Datenverbindung mit zwei oder mehr Steuervorrichtungen für die Elektronikeinheit zu ermöglichen. Demensprechend können mehrere Nutzer die elektronischen Medienentnahmeeinheiten steuern und überwachen.

Die Medienentnahmeeinheiten können aufputz- oder unterputzfähig ausgebildet sein. Auch eine Hinterwand-Montage ist denkbar. Dementsprechend ist vorgesehen, dass die Kommunikationsvorrichtung dazu eingerichtet ist, aufputz-, unterputz- oder hinterwandinstalliert zu werden. Im Falle einer Aufputz-Wasch(tische)armatur kann die Kommunikationsvorrichtung beispielsweise unter dem Waschtisch aufputz-angebracht werden, sodass sie zwar optisch versteckt, aber dennoch einfach erreichbar ist.

In einer besonders bevorzugten Ausführungsform des Systems sind die Kommunikationsvorrichtungen jeweils lokal bei den Elektronikeinheiten, mit denen sie verbunden sind, angeordnet. Vorzugsweise beträgt die Länge der leitungsgebundenen Datenverbindung weniger als 10m, bevorzugt weniger als 5m, besonderes bevorzugt weniger als 2m. D.h. der Abstand zwischen (jeder) Kommunikationsvorrichtung und der ihr jeweils zugeordneten Elektronikeinheit beträgt maximal 10m, bevorzugt maximal 5m, besonders bevorzugt maximal 2m.

In einer weiteren Ausführungsform des Systems bilden die Kommunikationsvorrichtungen ein drahtloses Netzwerk, insbesondere ein Mesh-Netzwerk, untereinander. Über dieses Netzwerk können die Kommunikationsvorrichtungen Daten austauschen, insbesondere Daten, betreffend Anweisungen der Steuervorrichtung oder Statistikdaten der elektronischen Medienentnahmeeinheiten. Es kann ein lokales als auch ein mit dem Internet verbundenes Netzwerk gebildet werden. Dabei sollen Kommunikationsvorrichtungen, die einen Abstand von bis zu 10m, bevorzugt bis zu 20m, insbesondere bevorzugt bis zu 50m haben, dazu eingerichtet sein, eine drahtlose Verbindung miteinander aufzubauen.

Bei dem Mesh-Netzwerk kann es sich um ein sog. Full-Mesh-Netzwerk handeln, bei dem sämtliche Kommunikationsvorrichtungen untereinander vernetzt sind, oder um ein Partial-Mesh-Netzwerk handeln, bei dem nicht sämtliche (sondern lediglich ein Teil der) Kommunikationsvorrichtungen untereinander Mesh-artig vernetzt sind.

In einer bevorzugten Ausführungsform kann das (drahtlose) Netzwerk, das durch die Kommunikationsvorrichtungen des Systems gebildet wird, bis zu 100 Kommunikationsvorrichtungen aufweisen.

Die Kommunikationsvorrichtungen sind in dem System vorzugsweise dazu eingerichtet, jeweils über eine drahtlose Datenverbindung mit einer, insbesondere gemeinsamen, Steuervorrichtung verbunden zu werden. Denkbar ist aber auch eine drahtlose Verbindung mit mehreren, insbesondere gemeinsamen, Steuervorrichtungen.

Besonders bevorzugt sind die Kommunikationsvorrichtungen des Systems dazu eingerichtet, Vorrichtungsinformationsdaten untereinander auszutauschen und basierend auf einem Vergleich dieser Daten sich zum Master (oder Slave) zu bestimmen. Nach Bestimmung des Masters ist vorzugsweise nur der Master dazu eingerichtet, mit der Steuervorrichtung in Datenverbindung zu stehen (zumindest indirekt). Dabei kann es sein, dass der Master des Systems wechseln kann. Beispielsweise kann bei Ausfall des Masters ein neuer Master bestimmt werden, der dann die Aufgaben des vorherigen Masters übernimmt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: das Aqua-3000-System aus dem Stand der Technik in einer schematischen Darstellung,
- Fig. 2: ein Ausführungsbeispiel des erfindungsgemäßen Systems in einer schematischen Darstellung,
- Fig. 3: ein Ausführungsbeispiel der erfindungsgemäßen Kommunikationsvorrichtung als schematisches Blockschaltbild,
- Fig. 4: eine elektronische Medienentnahmeeinheit mit einer Elektronikeinheit, die mit einer erfindungsgemäßen Kommunikationsvorrichtung und einer Batterie verbunden ist in einer schematischen Darstellung,
- Fig. 5: ein drahtloses Netzwerk mit mehreren erfindungsgemäßen Kommunikationsvorrichtungen in einer schematischen Darstellung.

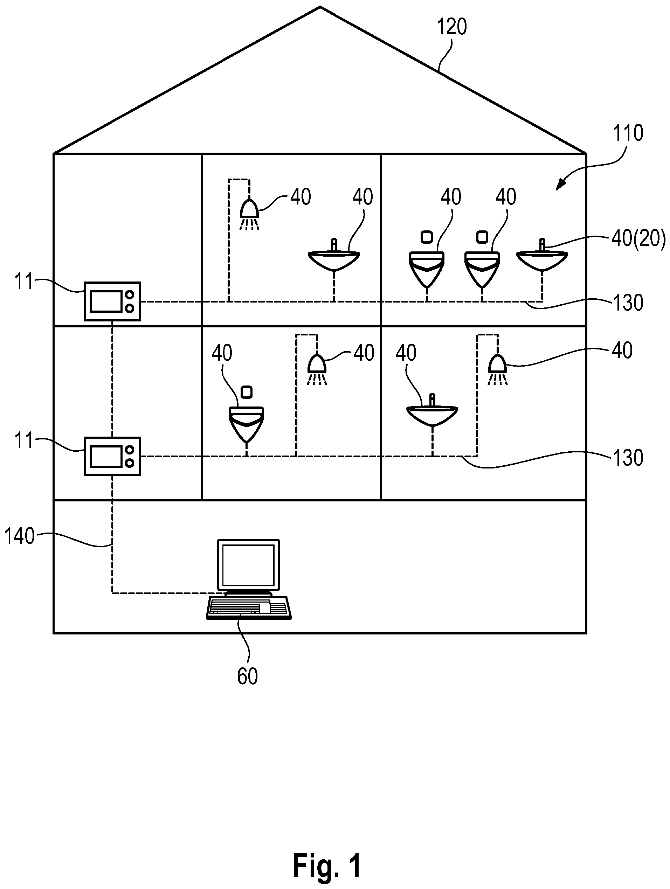

Fig. 1 zeigt das aus dem Stand der Technik bekannte Wassermanagementsystem "Aqua 3000 open", versehen mit dem Bezugszeichen 110. Das Aqua-3000-System 110 wird aus mehreren elektronischen Medienentnahmeeinheiten 40, denen jeweils eine Elektronikeinheit (nicht dargestellt) zugeordnet ist, und mehreren Funktionscontrollern 11 sowie einer zentralen Steuervorrichtung 60 gebildet. Die Elektronikeinheiten sind dabei Teil der sogenannten Armaturenebene. Die Elektronikeinheiten der Medienentnahmeeinheiten 40 sind in dem System 110 gruppenweise den Funktionscontrollern 11 zugeordnet und Teil eines weitläufigen Bussystems 130 (i.d.R. eines CAN-Bus-Systems) innerhalb des Gebäudes. Genauer ausgedrückt, handelt es sich bei den Funktionscontrollern 11 um ECC2 (ECC = Ethernet-CAN-Coppler)-Funktionscontroller, denen jeweils ein CAN-Inselnetzwerk 130 mit bis zu 32 Medienentnahmeeinheiten 40 zugeordnet ist. Über eine geeignete Schnittstelle der einzelnen ECCs können alle in einem Gebäude installierten Medienentnahmeeinheiten 40 an eine Steuervorrichtung 60, beispielsweise einen PC, angeschlossen oder auf eine bestehende Gebäudeleittechnik aufgeschaltet und gemeinsam verwaltet bzw. gesteuert werden. Dazu sind sämtliche Funktionscontroller 11 über eine Datenleitung 140 mit der Steuervorrichtung 60 verbunden. Anstatt der Verwendung von Datenleitung 140 kann in dem Aqua-3000-System 110 auch eine funkbasierte Datenübertragung gewählt werden.

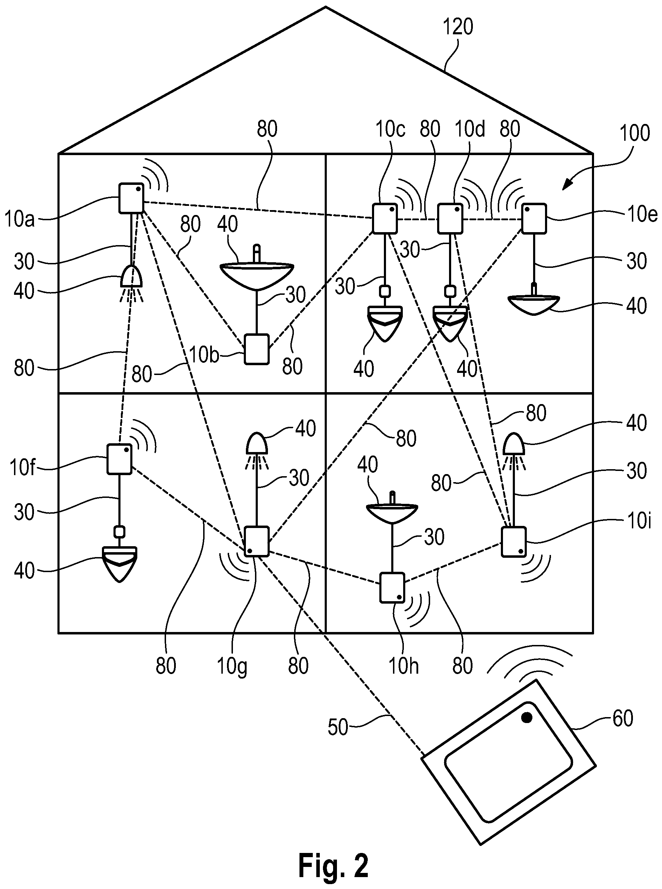

Fig. 2 zeigt ein Ausführungsbeispiel des erfindungsgemäßen Systems 100 in einer schematischen Darstellung. Wie im Vergleich zu Fig. 1 deutlich erkennbar ist, kann in dem erfindungsgemäßen System 100 auf ein Bussystem 130 zwischen den Elektronikeinheiten 20 bzw. den elektronischen Medienentnahmeeinheiten 40 verzichtet werden. Weiterhin kommt das neue System 110 auch ohne Funktionscontroller 11 aus. Vielmehr wird in dem neuen System 100 jeder Elektronikeinheit 20 einer Wasserentnahmeeinheit 40 eine Kommunikationsvorrichtung 10 bzw. 10a, 10b, usw. zugeordnet.

Im Gegensatz zu den Funktionscontrollern 11, die als Master eines großen Zweidraht-Bussystems eine Vielzahl von Medienentnahmeeinheiten 40 zu steuern bzw. überwachen haben, muss jede Kommunikationsvorrichtung 10 (bzw. 10a, 10b, usw.) lediglich die Funktion einer einzigen Medienentnahmeeinheit 40 steuern bzw. überwachen. Mithin sind die Ansprüche an eine Kommunikationsvorrichtung 10 wesentlich geringer als an einen Funktionscontroller 11. Eine Kommunikationsvorrichtung 10 hat gegenüber einem Funktionscontroller 11 daher den Vorteil, dass sie bauseitig einfacher realisierbar, größenmäßig kleiner und preislich günstiger sein kann.

Die Kommunikationsvorrichtungen 10 sind in dem gezeigten System 100 direkt bei den Medienentnahmeeinheiten 40 bzw. deren Elektronikeinheiten 20 angeordnet. Es besteht jeweils eine leitungsgebundene (Eins-zu-eins-)Datenverbindung 30 zwischen einer Kommunikationsvorrichtung 10 und der ihr zugeordneten Elektronikeinheit 20. Der Abstand zwischen Kommunikationsvorrichtungen 10 und Elektronikeinheiten beträgt vorzugsweise weniger als 2m, d.h. die Länge der leitungsgebundenen Datenverbindung 30 beträgt maximal 2m. Dementsprechend hält sich der Verkabelungsaufwand zur Anbindung der Kommunikationsvorrichtungen 10 an die Medienentnahmeeinheiten 40 in Grenzen. Vorzugsweise sind die leitungsgebundenen Datenverbindungen 30 in dem System 100 als Eindraht-Busse ausgebildet. Andere Datenverbindungen sind aber ebenso denkbar und können einzeln oder gruppenweise variieren.

Weiterhin bietet das System 100 als entscheidenden Vorteil, dass die Kommunikationsvorrichtungen 10 untereinander über Datenquerverbindungen 80 in Verbindung stehen. Insofern ist es möglich, dass die Kommunikationsvorrichtungen 10 untereinander Daten austauschen, insbesondere Daten von bzw. an die Steuervorrichtung 60 und/oder Daten der jeweils zugeordneten Elektronikeinheiten 20 der Medienentnahmeeinheiten 40. Die Datenquerverbindungen 80 sind vorliegend drahtlos ausgebildet.

In dem System 100 können über die Datenquerverbindungen 80 insbesondere Vorrichtungsinformationsdaten übermittelt werden, welche beispielsweise Kennungsdaten und Energieversorgungsdaten der jeweiligen Kommunikationsvorrichtungen 10a bis 10i umfassen. Nachdem die Kommunikationsvorrichtungen 10a bis 10i diese Daten untereinander ausgetauscht haben, findet in jeder Kommunikationsvorrichtung ein Vergleich der Vorrichtungsinformationsdaten anderer Kommunikationsvorrichtungen mit den Vorrichtungsinformationsdaten der eigenen Kommunikationsvorrichtung statt. Basierend auf diesem Vergleich (und in den Kommunikationsvorrichtungen hinterlegten Zuordnungsanweisungen) bestimmt jede Kommunikationsvorrichtung, ob sie sich als Master bestimmen kann. Die hinterlegten Zuordnungsanweisungen sind dabei vorzugsweise so angelegt, dass sich in jedem System 100 nur eine Kommunikationsvorrichtung als Master bestimmen kann. Prinzipiell sind aber auch mehrere Master im System 100 denkbar. Vorliegend sind die Kommunikationsvorrichtungen 10a bis 10i dazu eingerichtet, ihren Energieversorgungsstatus anhand der Energieversorgungsdaten untereinander zu vergleichen, wobei sich die Kommunikationsvorrichtung als Master bestimmt, deren Energieversorgungsstatus die höchste Energieversorgung aufweist.

Diejenige Kommunikationsvorrichtung, die sich als Master bestimmt hat, ist dazu eingerichtet, über die zweite Kommunikationsschnittstelle (nicht dargestellt) eine drahtlose Datenverbindung 50 mit der Steuervorrichtung 60 für die Elektronikeinheiten (nicht dargestellt) der elektronischen Medienentnahmestellen 40 zu ermöglichen. Mit anderen Worten ist vorgesehen, dass in dem System 100 die Steuervorrichtung 60 nicht mit sämtlichen Kommunikationsvorrichtungen 10a bis 10i des Systems in Verbindung steht, sondern lediglich mit der Master-Kommunikationsvorrichtung. Sollte eine direkte Verbindung der Steuervorrichtung 60 mit dem Master nicht möglich sein oder ist eine Datenverbindung mit einer anderen Kommunikationsvorrichtung vorteilhaft (bspw. weil diese näher an der Steuervorrichtung 60 angeordnet ist), kann über diese Kommunikationsvorrichtung 10 eine Verbindung mit dem Master hergestellt werden. In dem dargestellten Fall ist die Kommunikationsvorrichtung 10g als Master bestimmt worden.

Über die drahtlose Datenverbindung 50 können insbesondere Daten zur Parametrierung einer oder mehrere Elektronikeinheiten 20 bzw. der Medienentnahmeeinheiten 40 an die Master-Kommunikationsvorrichtung 10g übertragen werden. Diese kann die genannten Daten dann an die anderen Kommunikationsvorrichtungen 10a bis 10f, 10h und 10i über die Datenquerverbindungen 80 dann weiterleiten. Eine direkte Verbindung zwischen der Steuervorrichtung 60 und der Kommunikationsvorrichtung 10i, beispielsweise, ist daher nicht erforderlich damit die Steuervorrichtung 60 Daten an die Kommunikationsvorrichtung 10 übermitteln kann. Ebenso können über die Datenquerverbindungen 80 und die drahtlose Datenverbindung 50 beispielsweise statistische Daten von den jeweiligen Elektronikeinheiten 20 durch die Steuervorrichtung 60 erfasst und analysiert werden. Mithin kann das System 100 in einfacher Weise um weitere elektronische Medienentnahmeeinheiten 40 erweitert werden. Es ist lediglich notwendig, dass die Kommunikationsvorrichtung, die einer neu hinzugefügten Medienentnahmeeinheit 40 bzw. deren Elektronikeinheit 20 zugeordnet wird, mit zumindest einer der bestehenden Kommunikationsvorrichtungen in Datenquerverbindung 80 gebracht wird.

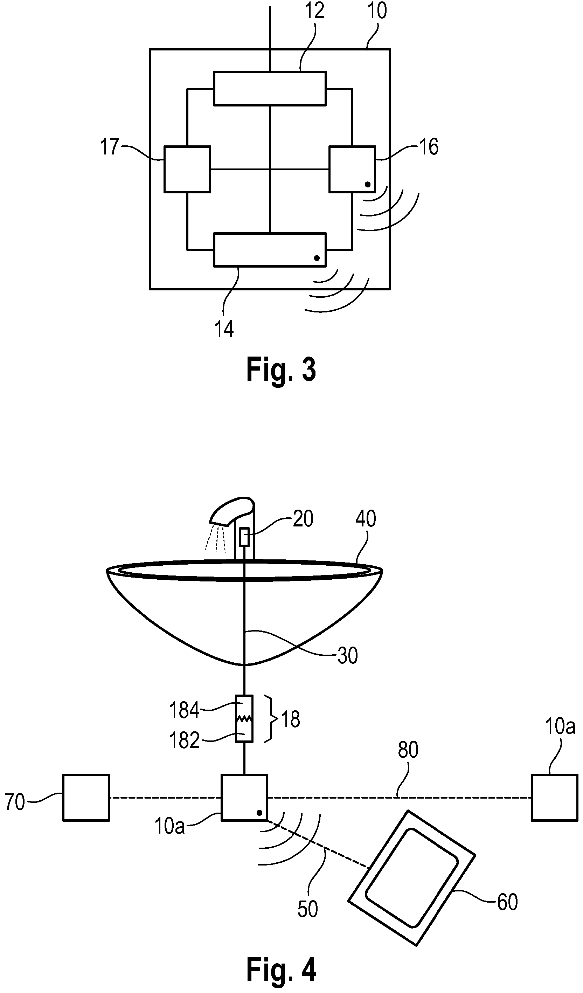

Fig. 3 zeigt ein Ausführungsbeispiel der erfindungsgemäßen Kommunikationsvorrichtung 10 als schematisches Blockschaltbild. Die Kommunikationsvorrichtung 10 weist eine erste Kommunikationsschnittstelle 12, eine zweite Kommunikationsschnittstelle 14 und eine dritte Kommunikationsschnittstelle 16 auf. Ferner weist die Kommunikationsvorrichtung einen Datenspeicher 17 zur Speicherung von Daten auf, wobei der Datenspeicher optional auch weggelassen werden kann. Die erste Kommunikationsschnittstelle 12, die zweite Kommunikationsschnittstelle 14 und die dritte Kommunikationsschnittstelle 16 sind miteinander derart verbunden, dass ein bidirektionaler Datenaustausch zwischen den jeweiligen Schnittstellen möglich ist. Darüber hinaus sind (optional) die erste Kommunikationsschnittstelle 12, die zweite Kommunikationsschnittstelle 14 und die dritte Kommunikationsschnittstelle 16 mit dem Datenspeicher 17verbunden. Die zweite Kommunikationsschnittstelle 14 ist vorliegend als Schnittstelle für eine drahtlose Datenverbindung mit einer Steuervorrichtung (zur Steuerung der Elektronikeinheit einer elektronischen Medienentnahmeeinheit; nicht dargestellt) ausgebildet. Sowohl die erste Kommunikationsschnittstelle 12 als auch die zweite Kommunikationsschnittstelle 14 und die dritte Kommunikationsschnittstelle 16 sind als bidirektionale Schnittstellen ausgebildet. Dementsprechend können sowohl von der ersten Kommunikationsschnittstelle 12 als auch von der zweiten Kommunikationsschnittstelle 14 und der dritten Kommunikationsschnittstelle 16 Daten empfangen und gesendet werden. Mit der gezeigten Kommunikationsvorrichtung 10 ist es daher möglich, über eine mobile Steuervorrichtung, die dazu geeignet ist, drahtlos mit der Kommunikationsvorrichtung 10 verbunden zu werden, die Elektronikeinheit einer elektronischen Medienentnahmeeinheit, die der gezeigten Kommunikationsvorrichtung 10 zugeordnet ist, zu steuern und zu überwachen. Ferner können, mittels der dritten Kommunikationsschnittstelle 16, sofern diese in Datenquerverbindung mit anderen Kommunikationsvorrichtungen 10 steht, die (diesen anderen Kommunikationsvorrichtungen zugeordneten) Elektronikeinheiten (anderer elektronischer Medienentnahmeeinheiten) gesteuert und überwacht werden. Eine direkte Datenquerverbindung ist dabei nicht notwendig. Eine indirekte Datenquerverbindung, beispielsweise über weitere Kommunikationsvorrichtungen, ist ebenso denkbar.

Fig. 4 zeigt eine elektronische Medienentnahmeeinheit 40 mit einer Elektronikeinheit 20, die mit einer erfindungsgemäßen Kommunikationsvorrichtung 10a und einer Batterie 70 verbunden ist. Die Elektronikeinheit 20 ist über eine leitungsgebundene Datenverbindung 30 mit der Kommunikationsvorrichtung 10 verbunden. Dabei wird die leitungsgebundene Datenverbindung 30 insbesondere Verbindung 18 (vorliegend eine Steckverbindung) gebildet, wobei ein erstes Verbindungselement 182 (vorliegend ein Steckverbindungselement) der Kommunikationsvorrichtung mit einem zweiten Verbindungselement 184 (vorliegend ein Steckverbindungselement) der Elektronikeinheit verbunden ist. Zur Energieversorgung ist die Kommunikationsvorrichtung 10 mit einer Batterie 70 verbunden. Die Batterie 70 versorgt neben der Kommunikationsvorrichtung 10a auch die Elektronikeinheit 20 der elektronischen Medienentnahmeeinheit 40 mit Strom. Die Kommunikationsvorrichtung 10 kann vorliegend über eine drahtlose Datenverbindung 50 zum Austausch von Daten mit einer Steuervorrichtung 60 verbunden sein. Ferner kann die Kommunikationsvorrichtung 10a über eine Datenquerverbindung 80 mit einer weiteren Kommunikationsvorrichtung 10b verbunden sein.

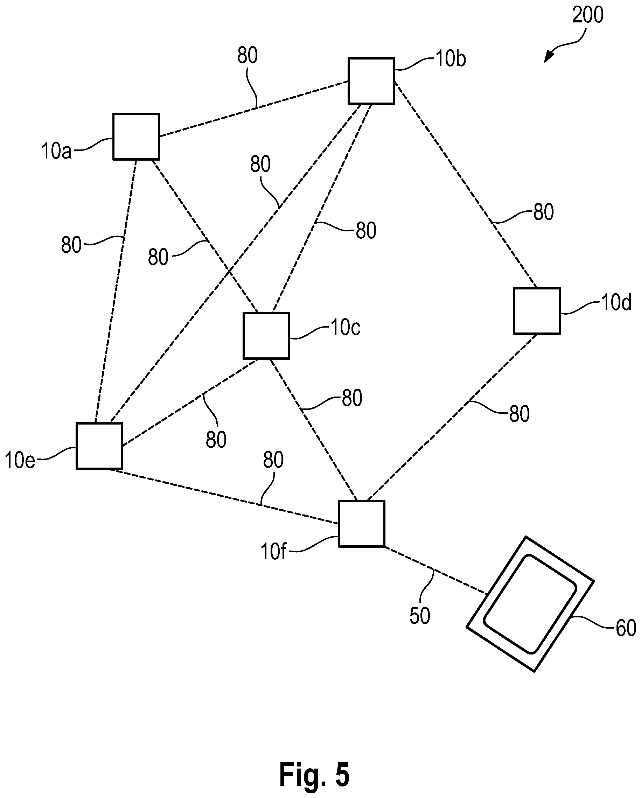

Fig. 5 zeigt ein drahtloses Netzwerk 200 mit mehreren erfindungsgemäßen Kommunikationsvorrichtungen 10 bzw. 10a, 10b, 10c, 10d, 10e und 10f in einer schematischen Darstellung. Das drahtlose Netzwerk 200 ist vorliegend ein Mesh-Netzwerk. Dabei sind die Kommunikationsvorrichtungen miteinander in drahtloser Weise über Datenquerverbindungen 80 vernetzt. Ferner weist das gezeigte Netzwerk 200 eine Steuervorrichtung 60 zur Steuerung und Überwachung einer Elektronikeinheit einer elektronischen Medienentnahmeeinheit auf. Die Steuervorrichtung 60 ist dabei über eine drahtlose Datenverbindung 50 mit einer der Kommunikationsvorrichtungen, nämlich der Kommunikationsvorrichtung 10f, also der Master-Kommunikationsvorrichtung, verbunden. Dadurch, dass die Kommunikationsvorrichtungen miteinander verbunden sind, können von der Steuervorrichtung 60 an die Kommunikationsvorrichtung 10f übertragene Daten über die Kommunikationsvorrichtung 10f an weitere Kommunikationsvorrichtungen des Netzwerks 200 übertragen werden, beispielsweise an die Kommunikationsvorrichtungen 10c und 10d. Damit ist es möglich, dass die Steuervorrichtung nicht mit sämtlichen Kommunikationsvorrichtungen (direkt) verbunden sein muss, um von diesen Daten zu erhalten und/oder Daten an diese zu senden. Will man von der Steuervorrichtung 60 aus beispielsweise an sämtliche, den Kommunikationsvorrichtungen zugeordnete, elektronische Medienentnahmeeinrichtungen einen Befehl für eine Hygienespülung zukommen lassen, reicht es, wenn dieser Befehl nur an die Kommunikationsvorrichtung 10f gerichtet wird, da diese den Befehl an die anderen Kommunikationsvorrichtungen des Mesh-Netzwerkes weiterleiten kann.

## Patentansprüche

1. Kommunikationsvorrichtung (10) für eine elektronische Medienentnahmeeinheit (40) im Sanitärbereich, insbesondere eine elektronische Sanitärarmatur, mit
- einer ersten Kommunikationsschnittstelle (12), die dazu eingerichtet ist, eine leitungsgebundene Datenverbindung (30) mit einer Elektronikeinheit (20) der elektronischen Medienentnahmeeinheit (40) zu ermöglichen, und
- einer zweiten Kommunikationsschnittstelle (14), die mit der ersten Kommunikationsschnittstelle (12) verbunden ist, wobei zweite Kommunikationsschnittstelle (14) dazu eingerichtet ist, eine drahtlose Datenverbindung (50) mit einer Steuervorrichtung (60) für die Elektronikeinheit (20) zu ermöglichen,
**dadurch gekennzeichnet, dass** die Kommunikationsvorrichtung (10) eine dritte Kommunikationsschnittstelle (16) aufweist, die dazu eingerichtet ist, eine Datenquerverbindung (80) mit einer oder mehreren weiteren, insbesondere gleichartigen, Kommunikationsvorrichtungen (10) zu ermöglichen.

2. Kommunikationsvorrichtung (10) nach Anspruch 1, **dadurch gekennzeichnet, dass** die dritte Kommunikationsschnittstelle die Datenquerverbindung (80) als drahtlose Datenquerverbindung (80) ermöglicht.

3. Kommunikationsvorrichtung (10) nach Anspruch 2, **dadurch gekennzeichnet, dass** die dritte Kommunikationsschnittstelle (16) eine Mesh-Netzwerk-Schnittstelle ist.

4. Kommunikationsvorrichtung (10) nach Anspruch 3, **dadurch gekennzeichnet, dass** die dritte Kommunikationsschnittstelle (16) eine Wirepas-Mesh-Netzwerk-Schnittstelle ist.

5. Kommunikationsvorrichtung (10) nach einem der Ansprüche 1 bis 4, **dadurch gekennzeichnet, dass** die Kommunikationsvorrichtung (10) dazu eingerichtet ist, über eine Gleichspannungsquelle mit Strom versorgt zu werden.

6. Kommunikationsvorrichtung (10) nach einem der Ansprüche 1 bis 5, **dadurch gekennzeichnet, dass** die Kommunikationsvorrichtung (10) dazu eingerichtet ist, über die Datenquerverbindung (80) Vorrichtungsinformationsdaten von der einen oder den mehreren anderen Kommunikationsvorrichtungen zu erhalten und die Vorrichtungsinformationsdaten mit eigenen Vorrichtungsinformationsdaten zu vergleichen und, basierend auf dem Vergleich, sich als Master zu bestimmen.

7. Kommunikationsvorrichtung (10) nach Anspruch 6, **dadurch gekennzeichnet, dass** die Vorrichtungsinformationsdaten Kennungsdaten und/oder Energieversorgungsdaten umfassen.

8. Kommunikationsvorrichtung (10) nach Anspruch 6 oder 7, **dadurch gekennzeichnet, dass** die Kommunikationsvorrichtung (10) dazu eingerichtet ist, die eine oder die mehreren anderen Kommunikationsvorrichtungen (10) einer oder mehreren Funktionsgruppen zuzuordnen.

9. System (100) zur Steuerung und Überwachung elektronischer Medienentnahmeeinheiten (40) im Sanitärbereich, insbesondere elektronischer Sanitärarmaturen, mit mehreren elektronischen Medienentnahmeeinheiten (40), die jeweils eine Elektronikeinheit (20) aufweisen, und mehreren Kommunikationsvorrichtungen (10),
**dadurch gekennzeichnet, dass** die Kommunikationsvorrichtungen (10) nach Anspruch 1 ausgebildet sind und untereinander in Datenquerverbindung (80) stehen.

10. Verwendung eines Mesh-Netzwerkes, insbesondere eines Wirepas-Mesh-Netzwerkes, für ein System zur Steuerung und Überwachung
elektronischer Medienentnahmeeinheiten (40) im Sanitärbereich, insbesondere elektronischer Sanitärarmaturen.
